# EUROPEAN PATENT SPECIFICATION

(11) **EP 1 714 209 B1**
(45) Date of publication and mention of the grant of the patent: **09.09.2009**
(21) Application number: 04806634.4
(22) Date of filing: 29.12.2004
(51) Int. Cl.: G06F 5/06

(54) **ELECTRONIC CIRCUIT WITH A FIFO PIPELINE**
ELEKTRONSICHE SCHALTUNG MIT EINER FIFO-PIPELINE
CIRCUIT ELECTRONIQUE A CANALISATION FIFO

(30) Priority: 13.01.2004 EP 04100087
(43) Date of publication of application: 25.10.2006
(73) Proprietor: Koninklijke Philips Electronics N.V., 5621 BA Eindhoven (NL)
(72) Inventor: TIMMERMANS, Daniel, NL-5656 AA Eindhoven (NL)
(74) Representative: Damen, Daniel Martijn
(86) International application number: PCT/IB2004/052932
(87) International publication number: WO 2005/069121

(56) References cited:
- WO-A-01/82064
- WO-A-02/35346
- US-A1- 2002 078 328
- SINGH M ET AL: "MOUSETRAP: ultra-high-speed transition-signaling asynchronous pipelines" PROCEEDINGS 2001 INTERNATIONAL CONFERENCE ON COMPUTER DESIGN. (ICCD). AUSTIN, TX, SEPT. 23-26, 2001, INTERNATIONAL CONFERENCE ON COMPUTER DESIGN, LOS ALAMITOS, CA : IEEE COMP. SOC, US, 23 September 2001 (2001-09-23), pages 9-17, XP010560958 ISBN: 0-7695-1200-3

## Description

The invention relates to an electronic circuit with an asynchronously operated FIFO pipeline.

An asynchronously operated FIFO buffer is described in an article titled "MOUSETRAP: Ultra-High-Speed Transition-Signaling Asynchronous Pipelines", by Montek Singh and Steven M. Nowick, Proc. International Conference on Computer Design, pp 9-17, 2001. MOUSETRAP provides for a chain of transparent/hold latches in parallel with a chain of handshake circuits. The handshake circuits serve to ensure that no new data item overwrites a previous data item in a latch until that previous data item has been handled. Each handshake corresponds to a respective latch. Each handshake circuit performs handshake transactions with upstream and downstream handshake circuits. A handshake transaction involves a request signal to start the handshake and an acknowledge signal when the request has been handled.

In MOUSETRAP, when a particular handshake circuit receives a request signal and is ready to handle the request signal, this particular handshake circuit sends back an acknowledge signal, switches its corresponding latch to hold and transmits a further request signal to the handshake circuit of the next latch downstream. When the handshake circuit of the next latch acknowledges the further request signal the particular handshake circuit becomes ready to receive the next request signal and makes its latch transparent.

The handshake circuit of MOUSETRAP uses a conditional pass gate and an exclusive OR gate. The conditional pass gate passes an incoming request downstream when the handshake circuit is ready. The exclusive OR gate of a particular handshake circuit is used to control the conditional pass circuit so that this pass circuit blocks the incoming request signal while there is a difference between the request signals from the particular handshake circuit and the next handshake circuit in the chain. Thus the exclusive OR gate detects whether the incoming request has been passed further downstream and when that is the case it commands the conditional pass gate to pass a subsequent incoming request.

Speed is an important design goal of FIFO buffers. One measure of speed is cycle time, i.e. the time needed between application of successive data signals at the output of a latch when successive data items are supplied at the maximum possible data rate. In the case of a handshake interface such as MOUSETRAP the cycle time is controlled by the handshake circuits, which must be designed so that they leave sufficient set-up and hold time for the latches. The cycle time realized by the handshake circuits corresponds to the minimum time between successive request signals, and is determined by the circuits in a circuit loop that generates the request signals.

In order to generate successive request signals in MOUSTRAP, signals have to travel through a loop that contains the conditional pass circuit of a particular handshake circuit, the conditional pass circuit of a next handshake circuit and the exclusive OR gate of the particular handshake circuit. This loop contains six logic gates: two in the conditional pass circuit of a particular handshake circuit, two in the conditional pass circuit of a next handshake circuit, and two in the exclusive OR gate. The number of these logic gates and their fan-out factor determine the cycle time. Most of the logic gates have two drive two inputs. However, one of the logic gates (the final logic gate of the conditional pass circuit of the particular handshake circuit has to drive three inputs (the input of the conditional pass circuit of the next handshake circuit, and inputs of the exclusive OR gates of the particular handshake circuit and its predecessor).

In the case of MOUSETRAP this results in delays that exceed the setup and hold time of the latches used in MOUSETRAP. MOUSETRAP does not suggest possibilities of further reductions in the delay realized by the handshake circuits, moreover such reductions could be useless if they are not consistent with the worst case delays needed for operating the latches

Among others, it is an object of the invention to reduce the cycle time of an asynchronously operated FIFO pipeline.

Among others, it is an object of the invention to make it unnecessary to impose limits on the cycle time of a handshake circuit of a FIFO pipeline to account for worst case delays in the latches of the pipe-line.

Among others, it is an object of the invention to reduce the maximum fan-out of logic gates in a circuit loop that determines the cycle time of an asynchronously operated FIFO pipeline.

The invention provides for a circuit as set out in Claim 1. According to the invention a FIFO pipeline contains a plurality of handshake chains in parallel (preferably two). A data item is represented by transmitting a handshake through a selected one of the handshake chains, the chain being selected under control of the value of the data item. Coordination circuits in successive stages of the pipeline ensure that handshake signals in different chains do not overtake each other. Thus, no latches are needed to represent the data that is used to select the chain. Hence the maximum possible speed of the handshake circuits can be used to transmit data, without adapting circuit design to delays of these data latches.

Preferably, the pipe-line has no chain of latches for storing different possible data values under timing control from the handshake circuits, i.e. all data is communicated by the selection of the handshake chain. This avoids delay associated with the need to drive control signals for the data latch. However, the invention is advantageous even if there is a chain of data latches, each corresponding to a respective stage of the pipe-line and clocked for example if a handshake arrives at the stage in any one of the handshake chains. The width of the data latch for a given data width in a chain can be made smaller when at least one bit is represented by the selection of a handshake chain. Thus, the delay caused by the need to drive control signals of the the data latches is reduced.

At the interface between the pipe-line and a data source circuit that produces data items for the pipe-line an interface circuit is preferably used to select the handshake chain through which a handshake for a data items is sent dependent on the value of the data item. Similarly, at the interface between the pipe-line and a data sink circuit that consumes data items from the pipe-line an interface circuit is preferably used to control a data signal dependent on the handshake chain through which a handshake arrives. The data source and/or sink circuits may be asynchronously operated circuits, with handshake interfaces and accompanying data input/outputs and/or synchronously operated circuits operating under control of a central clock (not necessarily the same clock for the source and sink circuit).

The invention is distinguished from use of a plurality of handshake chains, each with accompanying latches, where the handshakes are distributed over different handshake chains in a data independent way, e.g. alternately. This increases throughput rate but does not reduce the need for latches. In an embodiment of the present invention several of the claimed pluralities of chains may be used in parallel, with a data value independent distribution scheme, so that the data selects a chain within each plurality.

Any kind of handshake protocol may be used for exchanging handshakes, such as for example a four phase protocol or a two phase protocol, a protocol that uses two handshake lines (one for acknowledge signals and one for request signals) or a different number of handshake lines etc. In fact at different stages in the handshake chain and/or in different chains different protocols may be used.

In an embodiment, a four phase handshake protocol is used, and a circuit as set forth in the claims is used. This circuit reduces the maximum fan out of the logic gates in the circuit loop so that the cycle time of the FIFO pipeline is reduced. These and other advantageous aspects of the invention will be described using the following figures
Figure 1 shows a FIFO pipe-line
Figure 2 shows a handshake stage
Figure 3 vshows signals used in a handshake stage
Figure 4a-b show asynchronous interface circuits to a FIFO pipe-line
Figure 5a-b show synchronous interface circuits to a FIFO pipe-line

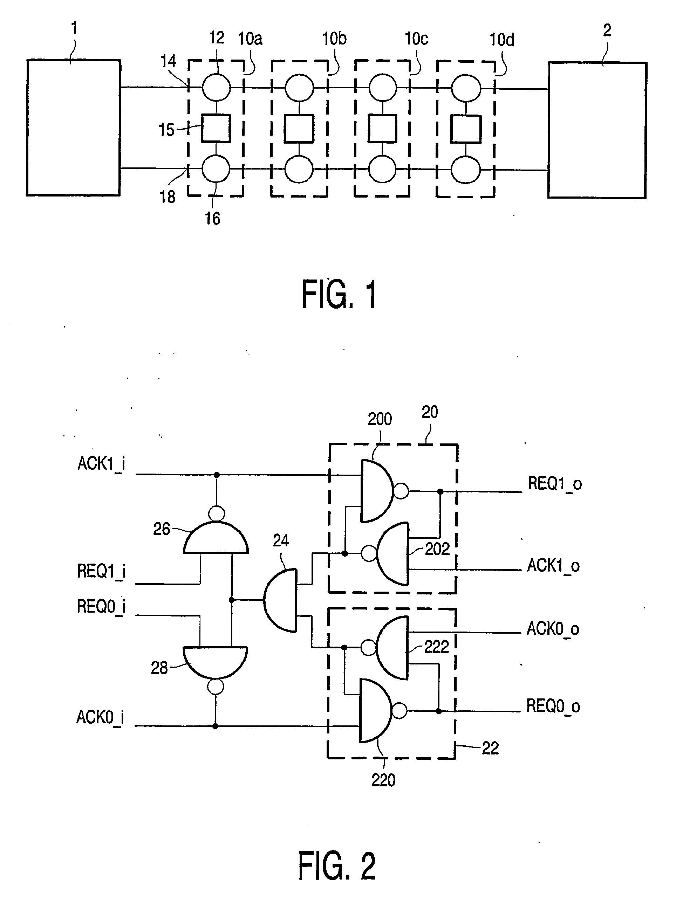

Figure 1 shows a data source circuit 1 and a data sink circuit 2 coupled by a FIFO pipeline wherein a number of stages 10a-d has been connected in series. Although four stages are shown by way of example it will be understood that any number of stages may be connected in series. Each stage 10a-d contains a first and second handshake circuit 12, 16. The first handshake circuits of the stages are coupled in a first handshake chain (although single lines are shown as handshake couplings, it will be understood that each handshake coupling may in fact contain more than one line for handshake signalling). The second handshake circuits of the stages are coupled in a second handshake chain. Furthermore each stage 10a-d contains a coordination circuit 15 coupled between the first and second handshake circuit of the stage 10a-d.

In operation, data bits are transported asynchronously through the pipe-line, using handshake signalling between pairs of successive stages 10a-d. Dependent on the logic value of the data bit (logic one and zero) a corresponding handshake for the data bit is passed either through the first chain or through the second chain. Coordination circuits 15 ensure that handshakes for logic ones and zeros in the different chains do not overtake each other, by delaying an acknowledge signal from a stage 10a-d in either handshake circuit 12, 16 until a previous request from either first or second handshake circuit 12, 16 has been acknowledged by a subsequent stage 10a-d.

As is well known, handshake signalling between two circuits involves sending a request signal from one circuit to the other and sending back an acknowledgement signal from the other circuit in response to the request signal once the other circuit is ready to handle a next request signal.

Different forms of realizing request and acknowledge signals may be used (the same in all stages or even different ones between different pairs of stages). In a four phase protocol, for example, two signal lines are used, one for sending request signals and one for sending acknowledge signals. A request signal is typically signalled by raising the logic level of the request line and an acknowledge signal is typically signalled by raising the logic level of the acknowledge line. After acknowledgement of the request the logic level of the request line is lowered, after which the logic level on the acknowledge line is lowered. Subsequently the interface is ready for a next handshake.

In a two phase handshake protocol, as another example, two signal lines are used, one for sending request signals and one for sending acknowledge signals. A request signal is typically signalled by changing the logic level of the request line and an acknowledge signal is typically signalled by changing the logic level of the acknowledge line. Subsequently the interface is ready for a next handshake. In another protocol a single signal line may be used instead of two signal lines, a request being signalled by raising the logic level and subsequently allowing the voltage level on the signal line to float, the acknowledge being signalled by lowering the logic level and subsequently allowing the voltage level on the signal line to float.

Figure 2 shows a circuit implementation of a stage that uses a four phase protocol. The stage has four handshake interfaces: a first input handshake interface REQ1_i, ACK1_i for handshakes that signal incoming logic ones, a second input handshake interface REQ0_i, ACK0_i for handshakes that signal incoming logic zeros, a first output handshake interface REQ1_o, ACK1_o for handshakes that signal outgoing logic ones, a second input handshake interface REQ0_o, ACK0_o for handshakes that signal outgoing logic zeros. The stage contains a first latch 20, a second latch 22, an AND circuit 24, and first and second acknowledge NAND gates 26, 28.

First acknowledge NAND gate 26 has inputs coupled to the request line REQ1_i of the first input handshake interface and an output of AND circuit 24. First acknowledge NAND gate 26 has an output coupled to the acknowledge line ACK1_i of the first input handshake interface. First latch 20 has set and reset inputs and data and not-data outputs. The output of first acknowledge NAND gate 26 is coupled to the set input of first latch 20. The data output of first latch 20 is coupled to the request line REQ1_o of the first output handshake interface. The acknowledge line ACK1_o of the first output handshake interface is coupled to the reset input of first latch 20. The not-data output of first latch 20 is coupled to a first input of AND circuit 24.

Second acknowledge NAND gate 28, second latch 22, and the second input and output handshake interfaces REQ0_i, ACK0_i, REQ0_o, ACK0_o of the stage are interconnected in the same way as first acknowledge NAND gate 28, first latch 20, and the first input and output handshake interfaces REQ1_i, ACK1_i, REQ1_o, ACK1_o of the stage. The not-data output of second latch 22 is coupled to a second input of AND circuit 24. By way of example, first and second latch 20, 22 are shown to be implemented as crosscoupled NAND gates 200, 202, 220, 222.

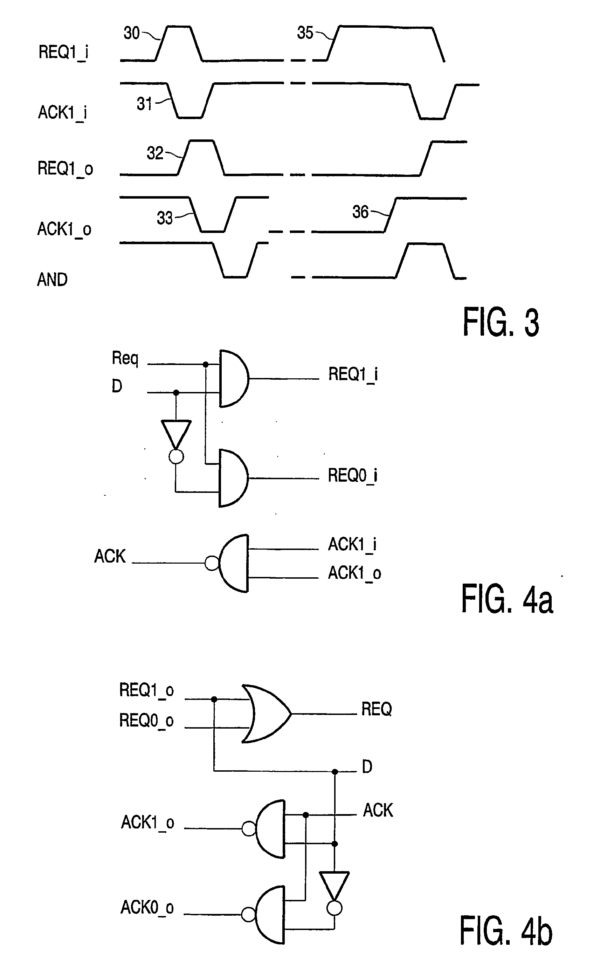

Figure 3 shows signals that illustrate operation of the stage. Signal traces show signals at the request line REQ1_i of the first input handshake interface, the acknowledge line ACK1_i of the first input handshake interface, the request line REQ1_o of the first output handshake interface, the acknowledge line ACK1_i of the first output handshake interface and the AND output of AND circuit 24. In the figure it has been assumed that only one input handshake interface of the stage is active, so that the second input of AND circuit 24 is logic high.

A rising transition 30 of the signal on request line REQ1_i of the first input handshake interface indicates an incoming request that starts a handshake cycle. When the signal at the output of AND circuit 24 is logic high, the rising transition on REQ1_i causes first acknowledge NAND gate 26 to produce a falling transition 31 on the acknowledge output ACK1_i of the first input handshake circuit (the falling transition representing acknowledgement of the incoming request). In response a preceding stage will lower the signal on request line REQ1_i of the first input handshake interface, which in turn will cause ACK1_i to rise.

This falling transition on acknowledge line ACK1_i of the first input handshake interface sets latch 20. When latch 20 is set its not-data output becomes low and the signal at the first input of AND circuit 24 becomes low. As a result the AND output becomes low, which terminates the acknowledge pulse by causing the signal on acknowledge line ACK1_i to rise back to a high value (if it has not already risen by the termination of the request pulse).

When latch 20 is set its data output drives a rising transition 32 at the request output REQ1_o of the first output handshake interface, which represents an outgoing request. At a later time a falling transition 33 on the acknowledge line ACK1_o of the first output handshake interface indicates acknowledgment of the outgoing request by a subsequent stage (not shown). Falling transition 33 resets latch 20, returning the circuit to its initial state.

Of course, it is possible that a new request signal arrives at request line REQ1_i of the first input handshake interface before latch 20 has been reset. The signals involved in this case are illustrated following rising transition 35 of the signal on request line REQ1_i of the first input handshake interface. In this case, the incoming request signal is not acknowledged until an acknowledgement 36 of the previous outgoing signal has been received. This acknowledgement resets latch 20, which causes the output of AND circuit 24 to go high so that the incoming request will be processed as described in the preceding.

So far the operation of the handshake signals for logic ones at the first input and output handshake interfaces has been described. In operation, handshake signals for logic zeros at the first input and output handshake interfaces may be temporally intermixed with these handshakes for logic ones. Processing of handshakes for logic zeros is similar to processing of handshakes for logic ones. When either first or second latch 20, 22 is set, indicating that an incoming handshake has been received on first or second input handshake interface REQ0_i, ACK0_i, REQ1_i, ACK1_i, but that the corresponding outgoing handshake on the first or second output handshake interface REQ0_o, ACK0_o, REQ1_o, ACK1_o has not yet been acknowledged, acknowledgement of the incoming handshake is delayed, as shown for the request signalled by rising transition 35, until the outgoing handshake has been acknowledged.

It may be noted that the rise of the acknowledge signals can be driven by the AND gates. In theory, therefore, the acknowledge signal could rise before a corresponding fall of the request signals. However, it is assumed that the response of the request signal to the fall in acknowledge signal is sufficiently fast to prevent this. Otherwise, an additional circuit may be added to delay the rise of the acknowledge signal until the request signal has fallen.

The cycle time of the interface is determined by the delays in a circuit loop that contains first acknowledge NAND gate 26 of a particular stage, a first NAND gate 200 in first latch 20 of the particular stage, first acknowledge NAND gate 26 of a subsequent stage, a second NAND gate 202 in first latch 20 of the particular stage and AND circuit 24 of the particular stage. This circuit loop contains six gates in series (counting a minimum of two gates in AND circuit 24). It may be noted that each gate is loaded by two other gates (except possibly for an internal NAND gate in AND circuit 24 which is only loaded by one gate). Thus a very short cycle time is realized.

Data source circuit 1 and data sync circuit 2 internally each may be asynchronous circuits or synchronous circuits (one or both clocked by its own clock, or both clocked by a common clock). An asynchronous circuit uses a data signal line in association with a handshake interface to indicate when valid data is available on the data signal line. In order to transport data from such an asynchronous circuit through stages 10a-d, a conversion circuit is preferably inserted between an asynchronous signal source 1 and stages 10a-d. Similar, in order to transport data to such an asynchronous circuit through stages 10a-d, a conversion circuit is preferably inserted between stages 10a-d and an asynchronous signal sink 2.

Figure 4a shows an interface circuit for use between a stage 10a and an asynchronous source circuit 1 that uses a data line D and handshake lines REQ, ACK to indicate when data is available on the data line D. A REQ1 signal is formed from the logic "AND" of REQ and D and a REQ0 signal is formed from the logic "AND" of REQ and the inverse of D. The returned acknowledge is formed from the logic NAND of the acknowledge signals ACK1_i and ACK0_i. In contrast to the acknowledge signals in the chain, the acknowledge signals returned to the asynchronous source circuit have conventional four phase signalling levels, which means that they signal acknowledgement with a logic high level (active high).

Figure 4b shows an interface circuit for use between a stage 10 d and a synchronous sink circuit 2 that uses a data line D and handshake lines REQ, ACK to indicate when data is available on data line. A REQ signal is formed from the logic "OR" of REQ1_o and REQ0_o, a data signal D is obtained from the REQ1_o. The returned acknowledge signal ACK (which preferably uses conventional active high signalling) may be used to generate ACK1_o and ACK0_o (which are active low) by logically NANDing ACK with the data signal D and its inverse respectively. However, this NANDing operation may be omitted if spurious acknowledge signals (not in response to a preceding request) are acceptable, as in the case of the embodiment of figure 2.

Of course, signal source circuit 1 and/or signal sink circuit 2 may also be synchronous (centrally clocked) circuits. In this case, interface circuits like those shown in figures 4a,b may be used in combination with conventional asynchronous-synchronous conversion circuits to interface to such a signal source circuit 1 and/or signal sink circuit 2. 30 As an alternative the relevant clock may be generated by looping back the ACK signal to the REQ signal via a delay circuit at the source side and/or by looping back the REQ signal to the ACK signal at the sink side.

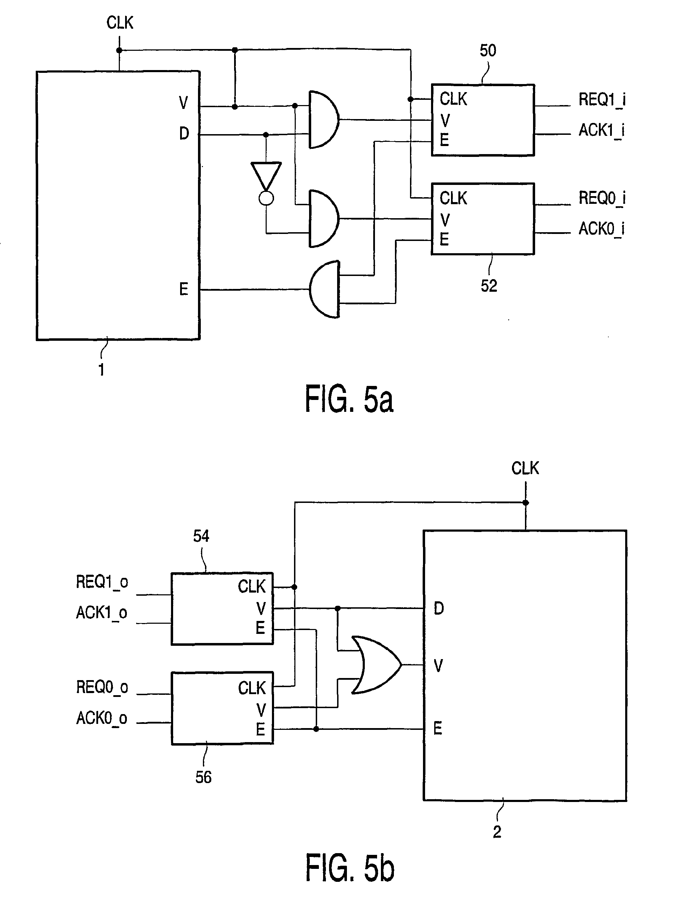

Figure 5a shows an alternative wherein pairs synchronous-asynchronous interface circuits 50, 52 are used to interface a synchronous source circuit 1 to the logic one and zero handshake interfaces REQ1_i, ACK1_i, REQ0_i, ACK0_i. In this embodiment synchronous source circuit 1 has a clock CLK input, a valid output "V", an enable input "E" and a data output "D" (in terms of FIFO buffer connections the V and E connections are also called V=write, E=FIFO full). The signal at valid output V is used to signal the availability of valid data and the signal at the enable input is used to signal the ability to accept data. Synchronous source circuit 1 is coupled to respective synchronous-asynchronous interface circuits 50, 52, which each have a synchronous interface with a clock input CLK, a "valid" input V and an enable output E, and an asynchronous interface coupled to request and acknowledge lines. Synchronous-asynchronous interface circuits are known per se; any type of interface circuit may be used. Valid signals from synchronous source circuit 1 are gated selectively to either the first or second synchronous-asynchronous interface circuit 50, 52, dependent on the value of the data at the data output of synchronous source circuit 1 and the enable circuit is formed from the logic "AND" of the enable signals from synchronous-asynchronous interface circuits 50, 52.

In operation data source circuit 1 generates a valid V signal in a clock cycle if it has data available and the enable signal is asserted. The interface circuits 50, 52 generate a request in response to the V signal and an E signal in response to an acknowledge. However, it should be realized that other interfaces may be used than this V,E interface, for example an interface in which the data source circuit 1 generates a V signal once it has data available (independent of the enable signal) and retracts the V signal once the E signal is asserted. When source circuit 1 produces new data in each clock cycle and it can be determined in advance that the FIFO buffer can transport data at the clock rate, then use of the control interface signals V and E may be omitted.

Figure 5b shows a similar interface to data sink circuit 2, using a first and second asynchronous-synchronous interface circuits 54, 56. Here data sink circuit 2 has a clock CLK input, a data input D, a valid input V and an enable output E (in the case of a FIFO interface the valid input and enable output may be termed V=FIFO not empty and E=read). Asynchronous-synchronous interface circuits 54, 56 each have an asynchronous interface coupled to the logic one and zero handshake interfaces REQ1_o, ACK1_o, REQ0_o, ACK0_o, respectively. Asynchronous-synchronous interface circuits 54, 56 each have a synchronous interface with a clock input CLK, a valid output V and an enable input E. The valid input of the data sink circuit 2 is formed from the logic OR of the valid outputs of the asynchronous-synchronous interface circuits 54, 56 and the data input of the data sink circuit 2 is formed from the valid output of the asynchronous-synchronous interface circuit 54 for logic "ones". The enable inputs of the asynchronous-synchronous interface circuits 54, 56 are driven by the enable output of data sink circuit 2. However, it should be realized that, as in the case of the data source circuit, other interfaces than this V,E interface may be used.

As will be appreciated, the figures show circuits that provide a one bit wide transport path. A multi-bit wide transport path may be realized in several ways. First of all by using respective handshake chains in parallel for each possible value of the multibit signal, with coordination circuits that prevent that handshake signals on different chains overtake each other. Secondly, respective pairs of chains for logic ones and zeros, each for a respective one of the bits of the multi-bit signal, may be used in parallel. In this case coordination between the pairs of chains is required only at the interface to sink circuit 2, to ensure that a handshake to an asynchronous sink circuit 2, or a valid signal to a synchronous sink circuit 2 is generated only when a handshake request has been generated on one line of each pair of chains for logic ones and zeros. Coordination may even be omitted if the spread in speed between the respective chains is sufficiently small.

Furthermore, the figures show direct connections between successive stages 10a-d, without intermediate logic processing. Of course logic processing circuits may be inserted between successive stages.

In one embodiment such a logic processing circuit computes one or more output bit values v as a function v=F(b,e) of the bit value "b" signalled by the handshake interfaces of a stage 10a-d and external data "e". In this embodiment the logic processing circuit selects, under influence of the external circuit "e" to which of the handshake interfaces of the subsequent stage 10a-d (the logic one or logic zero interface) it will couple the handshake interface from the preceding stage 10a-d. E.g. the logic circuit may couple both the handshake interface for logic ones and the handshake interface for logic zeros from the preceding stage to the handshake interface for logic ones of the subsequent stage, or swap the logic one and logic zero interface etc. This coupling may be changed dependent on the external signal "e".

In another embodiment, wherein a plurality of pairs of handshake interfaces for logic ones and zeros is used, such an intermediate logic processing circuit computes a logic function of the bits represented by respective ones of the pairs. In principle this may be realized by a handshake circuit that determines on which of the logic one or zero handshake interface of the subsequent stage 10a-d it should initiate a handshake in response to a combination of handshake requests from a plurality of pairs of handshake interfaces for logic ones and zeros.

Preferably, however, such an intermediate logic processing circuit converts the handshakes from logic one and zero interfaces into explicit logic signals with accompanying handshakes (using e.g. the circuit of figure 4a), computes the logic function from the explicit logic signals as well as a combined handshake for the converted signals and converts the computed logic value and combined handshake back to a handshake signals that represent logic ones and zeros respectively.

Although a single chain of stages 10a-d has been shown, it will be appreciated that such a chain may of course be forked etc. to provide partly parallel pipe-lines, each with a plurality of handshake chains for encoding data values by chain selection. In this case data items may be distributed over different pipelines in a data independent way. Moreover, although handshake circuit have been shown for four phase signalling it will also be appreciated that logic ones and zeros can of course be signalled with other types of handshake interfaces, such as an interface that uses two phase signalling. In fact the handshake interfaces between different pairs of stages 10a-d may be of different type and even the interface for ones and zeros may be of different type.

Furthermore, it will be appreciated that latches 20, 22 together serve to represent whether a request is pending on any of the output handshake interfaces. Instead of using separate latches a common latch may be used for this purpose, or any other memory for representing the state of stage 10a. Furthermore, it will be appreciated that without deviating from the invention the meaning of logic high and low for all signals may be exchanged, with an accompanying exchange of AND and OR functions. Similarly the meaning of logic high and low of part of the signals may be exchanged with accompanying logic function changes without deviating from the invention.

## Claims

1. An electronic circuit, comprising an asynchronously operated FIFO pipe-line (10a-d), the FIFO pipeline (10a-d) comprising a plurality of handshake chains functionally in parallel, for passing successive data items each by passing a handshake through a selected one of the handshake chains, the selected one of the handshake chains being selected dependent on a value of the data item, the FIFO pipeline (10a-d) comprising successive pipeline stages, each pipe-line stage comprising respective handshake stages (12, 16) of each of the plurality of handshake chains, and a coordination circuit (15) arranged to prevent handshakes in mutually different ones of handshake chains from overtaking one another.

2. An electronic circuit according to claim 1, comprising
- a data source circuit (1) with a data output (D) for signalling the value of the data item;
- an interface circuit coupled between the source circuit (1) and the FIFO pipeline (10a-d), the interface circuit having a plurality of output handshake interfaces ((REQ1_i, ACK1_i), (REQ0_i, ACK0_i)) coupled to respective ones of the handshake chains, and an interface selection input coupled to the data output (D) for selecting, under control of the value, one of the output handshake interfaces ((REQ1_i, ACK1_i), (REQ0_i, ACK0_i)) on which to start a handshake transaction for the value.

3. An electronic circuit according to claim 1, comprising
- a data sink circuit (2) with a data input (D) for receiving the value of the data item;
- an interface circuit coupled between the FIFO pipe-line (10a-d) and the sink circuit (2), the interface circuit having a plurality of input handshake interfaces ((REQ1_o, ACK1_o), (REQ0_o, ACK0_o)) coupled to respective ones of the handshake chains, the interface circuit being arranged to apply a data signal to the data input (D) upon receiving a respective handshake on any one of the input handshake interfaces ((REQ1_o, ACK1_o), (REQ0_o, ACK0_o)), the interface circuit controlling a value of the data signal dependent on the input handshake interface ((REQ1_o, ACK1_o), (REQ0_o, ACK0_o)) from which the respective handshake was received.

4. An electronic circuit according to claim 1, wherein at least one of the handshake stages is not coupled to a timing input of any latch with a data input for storing the values of the data items.

5. An electronic circuit according to Claim 1, wherein the coordination circuit (15) of a particular pipe-line stage (10a-d) is arranged to delay acknowledgement of incoming requests on any of the handshake stages (12, 16) of the particular pipe-line stage (10a-d) while an outgoing handshake request is pending on any of the handshake stages (12, 16).

6. An electronic circuit according to Claim 1, wherein each pipe-line stage (10a-d) comprises
- a plurality of input handshake interfaces ((REQ1_i, ACK1_i), (REQ0_i, ACK0_i)) in parallel, each for handling incoming requests from a respective one of the handshake chains;
- a plurality of output handshake interfaces ((REQ1_o, ACK1_o), (REQ0_o ACK0_o)) in parallel, each for generating outgoing requests in a respective one of the handshake chains
- a memory circuit (20, 22) coupled to the input handshake interfaces ((REQ1_i, ACK1_i), (REQ0_i, ACK0_i)) and the output handshake interfaces ((REQ1_o, ACK1_o), (REQ0_o, ACK0_o)), for representing whether completion of transmission of a request from any of the input handshake interfaces ((REQ1_i, ACK1_i), (REQ0_i, ACK0_i)) to any of the output handshake interfaces ((REQ1_o, ACK1_o), (REQ0_o ACK0_o)) is pending;
- the coordination circuit (24) having an input coupled to the memory circuit (20, 22) and an output coupled to the input handshake interfaces ((REQ1_i, ACK1_i), (REQ0_i, ACK0_i)) to prevent acknowledgement of incoming handshakes when the memory circuit (20,22) represents that an outgoing handshake is pending.

7. An electronic circuit according to claim 1, wherein four phase signalling is used in the handshake chains, each handshake stage comprising
- an input combination of a request line and an acknowledge line ((REQ1_i, ACK1_i), (REQ0_i, ACK0_i)), for handling incoming requests from a respective one of the handshake chains;
- an output combination of a request line and an acknowledge line ((REQ1_o, ACK1_o), (REQ0_o, ACK0_o)), for handling outgoing requests for the respective one of the handshake chains;
- a logic gate (26, 28) having a first logic input and a logic output coupled the request line ((REQ1_i, REQ0_i) and the acknowledge line (ACK1_i, ACK0_i) of the input combination respectively;
- a set-reset latch (20, 22) with a set input coupled to the output of the logic gate (26, 28), a data output coupled to the request line of the output combination (REQ1_o, REQ0_o), a reset input coupled to the acknowledge line (ACK1_o, ACK0_o) of the output combination, and a not-data output coupled to the coordination circuit (24);
- wherein the coordination circuit (24) is arranged to disable response of the logic gates (26, 28) of all handshake stages in the pipeline stage while the not-data output of any one of the set-reset latches (20, 22) of the pipeline stage indicates a set state.

8. An electronic circuit according to claim 7, wherein mutually opposite active levels are used for request and acknowledgement signals on the request lines (REQ1_i, REQ_1_o, REQ0_i, REQ0_o) and acknowledge lines (ACK1_i, ACK1_o, ACK0_i, ACK0_o)) respectively.

9. An electronic circuit according to claim 1, wherein the plurality of handshake chains consists of two handshake chains for passing binary values of data items.

## Patentansprüche

1. Elektronische Schaltung mit einer asynchron betriebenen FIFO-Pipeline (10a-d), wobei die FIFO-Pipeline (10a-d) eine Mehrzahl von funktionell parallel geschalteten Handshake-Ketten umfasst, um sukzessive Datenelemente jeweils durch Übermitteln eines Handshake durch eine ausgewählte Kette der Handshake-Ketten zu übertragen, wobei die ausgewählte Kette der Handshake-Ketten in Abhängigkeit eines Wertes des Datenelements ausgewählt wird, wobei die FIFO-Pipeline (10a-d) sukzessive Pipeline-Stufen umfasst, wobei jede Pipeline-Stufe jeweilige Handshake-Stufen (12, 16) von jeder der Mehrzahl von Handshake-Ketten sowie eine Koordinationsschaltung (15) umfasst, die angeordnet ist, um zu verhindern, dass Handshakes in zueinander unterschiedlichen Handshake-Ketten einander überholen.

2. Elektronische Schaltung nach Anspruch 1, mit
- einer Datenquellenschaltung (1) mit einem Datenausgang (D), um den Wert des Datenelements zu übermitteln;
- einer Schnittstellenschaltung, die zwischen der Datenquellenschaltung (1) und der FIFO-Pipeline (10a-d) gekoppelt ist, wobei die Schnittstellenschaltung eine Mehrzahl von Handshake-Ausgangsschnittstellen ((REQ1_i, ACK1_i), (REQ0_i, ACK0_i)), die an jeweilige Handshake-Ketten gekoppelt sind, sowie einen an den Datenausgang (D) gekoppelten Schnittstellenselektionseingang aufweist, um unter Steuerung des Wertes eine der Handshake-Ausgangsschnittstellen ((REQ1_i, ACK1_i), (REQ0_i, ACK0_i)) auszuwählen, auf der eine Handshake-Transaktion für den Wert zu starten ist.

3. Elektronische Schaltung nach Anspruch 1, mit
- einer Datensenke-Schaltung (2) mit einem Dateneingang (D) zum Empfang des Wertes des Datenelements;
- einer Schnittstellenschaltung zwischen der FIFO-Pipeline (10a-d) und der Datensenke-Schaltung (2), wobei die Schnittstellenschaltung eine Mehrzahl von Handshake-Eingangsschnittstellen ((REQ1_o, ACK1_o), (REQ0_o, ACK0_o)) aufweist, die an jeweilige Handshake-Ketten gekoppelt sind, wobei die Schnittstellenschaltung angeordnet ist, um bei Empfang eines jeweiligen Handshake auf einer der Handshake-Eingangsschnittstellen ((REQ1_o, ACK1_o), (REQ0_o, ACK0_o)) dem Dateneingang (D) ein Datensignal zuzuführen, wobei die Schnittstellenschaltung einen Wert des Datensignals in Abhängigkeit der Handshake-Eingangsschnittstelle ((REQ1_o, ACK1_o), (REQ0_o, ACK0_o)), von welcher der jeweilige Handshake empfangen wurde, steuert.

4. Elektronische Schaltung nach Anspruch 1, wobei mindestens eine der Handshake-Stufen nicht an einen Zeitsteuereingang eines Latch mit einem Dateneingang zur Speicherung der Werte der Datenelemente gekoppelt ist.

5. Elektronische Schaltung nach Anspruch 1, wobei die Koordinationsschaltung (15) einer bestimmten Pipeline-Stufe (10a-d) angeordnet ist, um eine Bestätigung ankommender Anforderungen in einer der Handshake-Stufen (12, 16) der bestimmten Pipeline-Stufe (10a-d) zu verschieben, während eine ausgehende Handshake-Anforderung in einer der Handshake-Stufen (12, 16) ausstehend ist.

6. Elektronische Schaltung nach Anspruch 1, wobei jede Pipeline-Stufe (10a-d) umfasst:
- eine Mehrzahl von parallelen Handshake-Eingangsschnittstellen ((REQ1_i, ACK1_i), (REQ0_i, ACK0_i)), wobei jede zur Bearbeitung ankommender Anforderungen von einer jeweiligen Kette der Handshake-Ketten dient;
- eine Mehrzahl von parallelen Handshake-Ausgangsschnittstellen ((REQ1_o, ACK1_o), (REQ0_o, ACK0_o)), wobei jede zur Erzeugung von ausgehenden Anforderungen in einer jeweiligen Kette der Handshake-Ketten dient;
- einen Speicherkreis (20, 22), der an die Handshake-Eingangsschnittstellen ((REQ1_i, ACK1_i), (REQ0_i, ACK0_i)) und die Handshake-Ausgangsschnittstellen ((REQ1_o, ACK1_o), (REQ0_o, ACK0_o)) gekoppelt ist, um zu zeigen, ob ein Abschluss der Übertragung einer Anforderung von einer der Handshake-Eingangsschnittstellen ((REQ1_i, ACK1_i), (REQ0_i, ACK0_i)) zu einer der Handshake-Ausgangsschnittstellen ((REQ1_o, ACK1_o), (REQ0_o, ACK0_o)) ausstehend ist;
- die Koordinationsschaltung (24) mit einem an den Speicherkreis (20, 22) gekoppelten Eingang und einem an die Handshake-Eingangsschnittstellen ((REQ1_i, ACK1_i), (REQ0_i, ACK0_i)) gekoppelten Ausgang, um eine Bestätigung ankommender Handshakes zu verhindern, wenn der Speicherkreis (20, 22) zeigt, dass ein ausgehender Handshake aussteht.

7. Elektronische Schaltung nach Anspruch 1, wobei in den Handshake-Ketten eine Vierphasensignalisierung verwendet wird, wobei jede Handshake-Stufe umfasst:
- eine Eingangskombination aus einer Anforderungsleitung und einer Bestätigungsleitung ((REQ1_i, ACK1_i), (REQ0_i, ACK0_i)) zur Bearbeitung ankommender Anforderungen von einer jeweiligen Kette der Handshake-Ketten;
- eine Ausgangskombination aus einer Anforderungsleitung und einer Bestätigungsleitung ((REQ1_o, ACK1_o), (REQ0_o, ACK0_o)) zur Bearbeitung ausgehender Anforderungen für die jeweilige Kette der Handshake-Ketten;
- ein Logikgatter (26, 28) mit einem ersten Logikeingang und einem Logikausgang, die jeweils an die Anforderungsleitung (REQ1_i, REQ0_i) und die Bestätigungsleitung (ACK1_i, ACK0_i) der Eingangskombination gekoppelt sind;
- ein Setz-Rücksetz-Latch (20, 22) mit einem an den Ausgang des Logikgatters (26, 28) gekoppelten Setzeingang, einem an die Anforderungsleitung der Ausgangskombination (REQ1_o, REQ0_o) gekoppelten Datenausgang, einem an die Bestätigungsleitung (ACK1_o, ACK0_o) der Ausgangskombination gekoppelten Rücksetzeingang sowie einem an die Koordinationsschaltung (24) gekoppelten Nicht-Datenausgang;
- wobei die Koordinationsschaltung (24) angeordnet ist, um eine Antwort der Logikgatter (26, 28) sämtlicher Handshake-Stufen in der Pipeline-Stufe zu deaktivieren, während der Nicht-Datenausgang eines der Setz-Rücksetz-Latches (20, 22) der Pipeline-Stufe einen Setz-Zustand signalisiert.

8. Elektronische Schaltung nach Anspruch 7, wobei zueinander entgegengesetzte, aktive Pegel jeweils für Anforderungs- und Bestätigungssignale auf den Anforderungsleitungen (REQ1_i, REQ_1_o, REQ0_i, REQ0_o) und Bestätigungsleitungen (ACK1_i, ACK1_o, ACK0_i, ASK0_o) verwendet werden.

9. Elektronische Schaltung nach Anspruch 1, wobei die Mehrzahl von Handshake-Ketten aus zwei Handshake-Ketten zur Übertragung von Binärwerten von Datenelementen besteht.

## Revendications

1. Circuit électronique, comprenant une canalisation FIFO à fonctionnement asynchrone (10a-d), la canalisation FIFO (10a-d) comprenant une pluralité de chaînes d'établissement de connexion fonctionnellement en parallèle, pour faire passer des éléments de données successifs en faisant passer un établissement de connexion à travers une chaîne sélectionnée des chaînes d'établissement de connexion, la chaîne sélectionnée des chaînes d'établissement de connexion étant sélectionnée en fonction d'une valeur de l'élément de données, la canalisation FIFO (10a-d) comprenant des étages de canalisation successifs, chaque étage de canalisation comprenant les étages d'établissement de connexion respectifs (12, 16) de chacune de la pluralité de chaînes d'établissement de connexion, et un circuit de coordination (15) conçu pour empêcher les établissements de connexion dans des chaînes mutuellement différentes des chaînes d'établissement de connexion de se dépasser les uns les autres.

2. Circuit électronique selon la revendication 1, comprenant
- un circuit source de données (1) avec une sortie de données (D) pour signaler la valeur de l'élément de données ;
- un circuit d'interface couplé entre le circuit source (1) et la canalisation FIFO (10a-d), le circuit d'interface ayant une pluralité d'interfaces d'établissement de connexion de sortie ((REQ1_i, ACK1_i), (REQ0_i, ACK0_i)) couplées aux chaînes respectives des chaînes d'établissement de connexion, et une entrée de sélection d'interface couplée à la sortie de données (D) pour sélectionner, sous le contrôle de la valeur, une des interfaces d'établissement de connexion de sortie ((REQ1_i, ACK1_i), (REQ0_i, ACKo_i)) sur laquelle commencer une transaction d'établissement de connexion pour la valeur.

3. Circuit électronique selon la revendication 1, comprenant
- un circuit collecteur de données (2) avec une entrée de données (D) pour recevoir la valeur de l'élément de données ;
- un circuit d'interface couplé entre la canalisation FIFO (10a-d) et le circuit collecteur (2), le circuit d'interface ayant une pluralité d'interfaces d'établissement de connexion d'entrée ((REQ1_o, ACK1_o), (REQ0_o, ACK0_o)) couplées à des chaînes respectives des chaînes d'établissement de connexion, le circuit d'interface étant conçu pour appliquer un signal de données à l'entrée de données (D) à la réception d'un établissement de connexion respectif sur une quelconque des interfaces d'établissement de connexion d'entrée ((REQ1_o, ACK1_o), (REQ0_o, ACK0_o)), le circuit d'interface contrôlant une valeur du signal de données en fonction de l'interface d'établissement de connexion d'entrée ((REQ1_o, ACK1_o), (REQ0_o, ACK0_o)) à partir de laquelle l'établissement de connexion respectif a été reçu.

4. Circuit électronique selon la revendication 1, dans lequel au moins un des étages d'établissement de connexion n'est pas couplé à une entrée de synchronisation d'un quelconque verrou avec une entrée de données pour stocker les valeurs des éléments de données.

5. Circuit électronique selon la revendication 1, dans lequel le circuit de coordination (15) d'un étage de canalisation (10a-d) particulier est conçu pour retarder l'accusé de réception de demandes entrantes sur un quelconque des étages d'établissement de connexion (12, 16) de l'étage de canalisation (10a-d) particulier tandis qu'une demande d'établissement de connexion sortante est en cours sur un quelconque des étages d'établissement de connexion (12, 16).

6. Circuit électronique selon la revendication 1, dans lequel chaque étage de canalisation (10a-d) comprend
- une pluralité d'interfaces d'établissement de connexion d'entrée ((REQ1_i, ACK1_i), (REQ0_i, ACK0_i)) en parallèle, chacune étant destinée à gérer les demandes entrantes d'une chaîne respective des chaînes d'établissement de connexion ;
- une pluralité d'interfaces d'établissement de connexion de sortie ((REQ1_o, ACK1_o), (REQ0_o, ACK0_o)) en parallèle, chacune étant destinée à générer des demandes sortantes dans une chaîne respective des chaînes d'établissement de connexion
- un circuit de mémoire (20, 22) couplé aux interfaces d'établissement de connexion d'entrée ((REQ1_i, ACK1_i), (REQ0_i, ACK0_i)) et aux interfaces d'établissement de connexion de sortie ((REQ1_o, ACK1_o), (REQ0_o, ACK0_o)), pour indiquer si l'exécution de la transmission d'une demande d'une quelconque des interfaces d'établissement de connexion d'entrée ((REQ1_i, ACK1_i), (REQ0_i, ACK0_i)) vers une quelconque des interfaces d'établissement de connexion de sortie ((REQ1_o, ACK1_o), (REQ0_o, ACK0_o)) est en cours ;
- le circuit de coordination (24) ayant une entrée couplée au circuit de mémoire (20, 22) et une sortie couplée aux interfaces d'établissement de connexion d'entrée ((REQ1_i, ACK1_i), (REQ0_i, ACK0_i)) pour empêcher un accusé de réception d'établissements de connexion entrants lorsque le circuit de mémoire (20, 22) indique qu'un établissement de connexion sortant est en cours.

7. Circuit électronique selon la revendication 1, dans lequel une signalisation en quatre phases est utilisée dans les chaînes d'établissement de connexion, chaque étage d'établissement de connexion comprenant
- une combinaison d'entrée d'une ligne de demande et d'une ligne d'accusé de réception ((REQ1_i, ACK1_i), (REQ0_i, ACK0_i)), pour gérer les demandes entrantes d'une chaîne respective des chaînes d'établissement de connexion ;
- une combinaison de sortie d'une ligne de demande et d'une ligne d'accusé de réception ((REQ1_o, ACK1_o), (REQ0_o, ACK0_o)), pour gérer les demandes sortantes pour la chaîne respective des chaînes d'établissement de connexion ;
- une porte logique (26, 28) ayant une première entrée logique et une sortie logique couplées à la ligne de demande (REQ1_i, REQ0_i) et à la ligne d'accusé de réception (ACK1_i, ACK0_i) de la combinaison d'entrée, respectivement ;
- un verrou défini-redéfini (20, 22) avec une entrée définie couplée à la sortie de la porte logique (26, 28), une sortie de données couplée à la ligne de demande de la combinaison de sortie (REQ1_o, REQ0_o), une entrée redéfinie couplée à la ligne d'accusé de réception (ACK1_o, ACK0_o) de la combinaison de sortie, et une sortie de non-données couplée au circuit de coordination (24) ;
- dans lequel le circuit de coordination (24) est conçu pour désactiver la réponse des portes logiques (26, 28) de l'ensemble des étages d'établissement de connexion dans l'étage de canalisation alors que la sortie non-données de l'un quelconque des verrous défini-redéfini (20, 22) de l'étage de canalisation indique un état défini.

8. Circuit électronique selon la revendication 7, dans lequel des niveaux actifs mutuellement opposés sont utilisés pour les signaux de demande et d'accusé de réception sur les lignes de demande (REQ1_i, REQ1_o, REQ0_i, REQ0_o) et les lignes d'accusé de réception (ACK1_i, ACK1_o, ACK0_i, ACK0_o), respectivement.

9. Circuit électronique selon la revendication 1, dans lequel la pluralité de chaînes d'établissement de connexion comprend deux chaînes d'établissement de connexion pour le passage de valeurs binaires d'éléments de données.
